**Europäisches Patentamt**

**European Patent Office**

**Office européen des brevets**

(19)

(11) Publication number: **0 145 153**
**B1**

(12)

# EUROPEAN PATENT SPECIFICATION

(45) Date of publication of the patent specification:
**05.11.86**

(51) Int. Cl.⁴: **B 65 D  83/02**

(21) Application number: **84306793.5**

(22) Date of filling: **05.10.84**

(54) Tube storage and delivery device.

(30) Priority: **07.10.83 US 539848**

(43) Date of publication of application:
**19.06.85 Bulletin 85/25**

(45) Publication of the grant of the patent:
**05.11.86 Bulletin 86/45**

(84) Designated Contracting States:
**AT BE CH DE FR GB IT LI NL SE**

(56) References cited:
**AT-B-306 832**
**US-A-4 180 192**

(73) Proprietor: **RAYCHEM CORPORATION, 300
Constitution Drive, Menlo Park California 94025
(US)**

(72) Inventor: **Arrington, John Preston, 439, Midway
Avenue, San Mateo California 94402 (US)**
Inventor: **Jaraczewski, Kathleen Adair, 505,
Cypress Point Drive NBR. 4, Mountain View
California 94043 (US)**
Inventor: **Moisson, Marc Felix, 340 Hacienda Way,
Los Altos California 94022 (US)**
Inventor: **Wisecarver, Martin L., 22032 Fallview
Lane, Sonora California 93570 (US)**

(74) Representative: **Benson, John Everett, Raychem
Limited Intellectual Property Law Department
Swan House 37- 39, High Holborn, London WC1
(GB)**

## Description

## The invention relates to a tube storage and delivery device.

## Background of the Invention

In a number of areas there is a need to use small amounts of materials which are of a high purity or must be protected from the environment until used. Opening a container to remove a small amount of such material for use exposes the remaining material to the environment or to impurities. In some applications premeasured quantities of materials are needed for automatic processes. In other applications the material is used in place in small containers such as tubes.

In many applications a convenient way to premeasure, protect or use materials is in tubes which are open at both ends. Examples of such tubes are those used for storing and curing adhesives for splicing optical fibers, such as shown in UK patent publications 2135077 and 2136147. The problem presented by such tubes is how to place the proper amount of adhesive in the tube and use it. It is not practical to do this in the field where contamination of the material may occur and where it is impractical to measure the desired amount with precision. In some applications the material must be protected from the environment. For example, some of the optical fiber adhesives are cured by exposure to ultraviolet light. Exposure to light may cause premature curing before the fibers are properly positioned for splicing. Prefilled tubes provide a convenient means for protecting the adhesive from exposure to light until the splice is ready for curing the adhesive.

It is therefore desirable to have means to enable dispensing materials in small tubes under controlled conditions and means for storing the tubes and transporting them to the point of use. It is further desirable to provide means for dispensing the tubes for use in machines or automated processes without exposing the material in the tube to the environment.

## Description of the Invention

This invention provides, a device for storing and dispensing tubes which comprises a case containing an elongate flexible means for engaging and sealing the ends of a tube, which elongate flexible means is connected to means for moving said elongate flexible means relative to the case to move the tube within the case and to discharge the tube from the case and which elongate flexible means is in contact with support means to maintain the elongate flexible means against the ends of the tube to seal the ends of the tube and to move the tube. The tubes are preferably tubes for housing splices in optical fibres, and preferably contain an adhesive for joining optical fibres. Such an adhesive preferably has an refractive index that matches that of an optical fibre.

The following description of a specific embodiment of this invention illustrates the device provided by this invention.

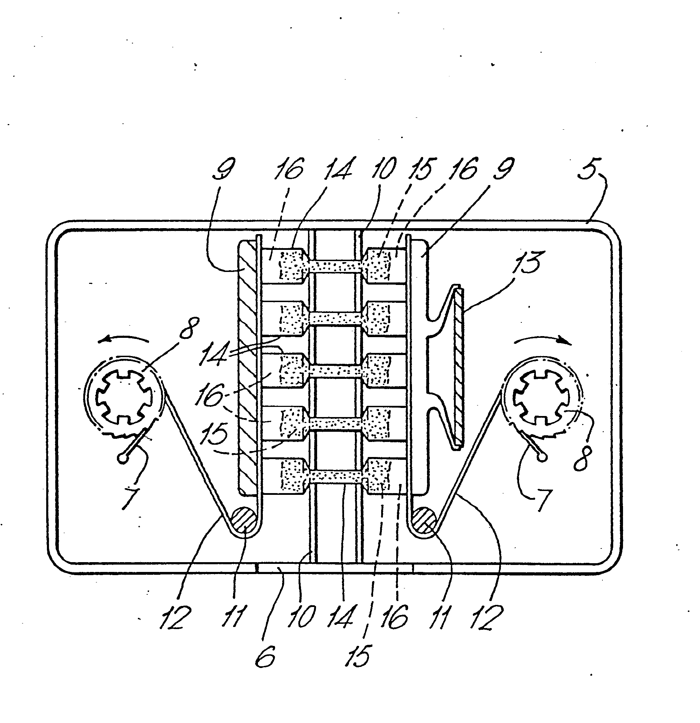

Figure 1 is a view of the internal parts of a device embodying this invention. The device is a cassette-type article having case 5 which is formed in top and bottom parts. Figure 1 shows the cassette with the top half of the case 5 removed and shows the preferred hour-glass or dog-bone shaped tubes 14 in the cassette.

In this specific embodiment, the elongate flexible means 12 are strips of tape which have a coating of adhesive on the side of the tape facing the tubes 14. The adhesive coating provides a good seal of the ends of tubes 14, but which readily releases from the end of the tube when the tube is discharged from the cassette. The tape strips 12 are positioned between tubes 14 and support members 9, one of which is connected to pressure means 13, such as a spring. Tubes 14 are thereby held in position between tapes 12. Tapes 12 pass around pins 11 and are attached to wheels 8 for pulling the tapes 12. Rachet means 7 prevents the wheels from turning back and relieving the tension on tapes 12. The cassette is used by placing it in a device which has shafts to engage the interior surface of wheels 8 and turn them in syncronization to move tapes 12 at the same speed. Tube 14 is thereby moved past pins 11 and discharged through port 6 in the case as tapes 12 disengage from tube 14 at pins 11. Optional guide 10 is provided in this embodiment to guide tubes 14.

Adhesive 15 in tube 14 fills the center portion of the tube. Air space 16 is provided to prevent adhesive 15 from contacting tape 12. With both ends of the tube 14 sealed with tape 12, adhesive 15 is of sufficient viscosity that it will not flow against tape 12 or through tube 14 to one end.

That embodiment of the invention is particularly adapted for use in an automatic machine which dispenses the tubes from the cassette then use the tubes. In this example the cassette case is preferably made opaque, the tube is dispensed into an optical fiber splice box or other apparatus and is thereby protected from exposure to light or inpurities until in place with the fibers and cured by a light source in the splice box. The invention therefore also provides an apparatus for splicing an optical fibre which includes an article for storing and dispensing according to the invention.

The ends of the fibres to be joined are inserted into respective ends of a tube, and then properly aligned before the adhesive in the tube is activated, preferably by curing, especially by uv light. Alignment is preferably carried out by launching light into one fibre (preferably at a bend in the fibre) and moving the end of one fibre relative to that of the other until the light detected at the other fibre (preferably that leaving a bend in the fibre) is maximized.

The tubes are preferably articles as disclosed in GB-A-2136147, namely generally tubular straight containers each of which has two open ends whose smallest internal cross-sectional dimension is at least 150 microns and whose largest internal cross-sectional dimension is less than 3000 microns, and whose internal cross-section is greater at the ends than at an intermediate region between the ends.

We prefer that the tubes have at least their inner surface coated with a release against and/or comprise an inherently releasing material. An adhesive within the tubes used to join the fibres is thereby decoupled from the tubes, and any shrinkage or flow on activation will not spoil alignment of the fibres. See GB-A-2135077.

We prefer that the adhesive within the tubes when cured is able to maintain an acceptable coupling efficiency between the optical fibres through temperature cycles (preferably at least three over 24 hours) from -30°C to 60°C. The adhesive also preferably maintains acceptable coupling efficiency at a relative humidity of 95% at 40°C, and also at 70°C.

The adhesive before cure preferably comprises: a polyfunctional acrylate or methacylate monomer having 3-7 acrylic or methacrylic groups appended to a backbone having 3-30 carbon atoms (specific examples are trimethylolpropane-triacrylate, pentaerythrytoltetra-acrylate, or dipentaerythritol-hexacrylate); and a coreactive vinyl monomer having 1-3 groups of formula $-CR=CH_2$ where R is -H or $-CH_3$ wherein the weight ratio of polyfunctional acrylate or methacrylate to coreactive monomer is between 3:2 and 9:1, provided that the former has one more acrylate or methacrylate group than the latter. Examples of coreactive vinyl monomers include triethylene glycol diacrylate, triethylene glycol dimethacrylate, 1,6 hexanediol diacrylate, trimethylolpropane triacrylate, N-vinyl pyrrolidone, methylmethacrylate, and ethoxylated bisphenol-diacrylate. A photoinitiator is also preferably included in the composition.

## Claims

1. Device for storing and dispensing tubes comprising a case (5) containing an elongate flexible means (12) for engaging and sealing the ends of the tube (14), which elongate flexible means (12) is connected to means (8) for moving said elongate flexible means relative to the case (5) to move the tube (14) within the case and to discharge the tube from the case and which elongate flexible means is in contact with support means (9) to maintain the elongate flexible means against the ends of a tube to seal the ends of the tube and to move the tube.

2. The device of claim 1 wherein the elongate flexible means (12) comprises strips for engaging and sealing the ends of the tube.

3. The device of claim 2 wherein the means (8) for moving said strips provides movement of the strips to thereby maintain the seal between the strips and the tube while moving the tube in the case to discharge the tube from the case.

4. The device of claim 2, wherein the stored tube is suitable for sealing a splice in an optical fibre.

5. The device of claim 2 or 4 wherein the tube contains a liquid.

6. The device of claim 5 wherein the tube contains a liquid adhesive in the center portion of the tube.

7. The device of claim 6 wherein the tube contains an adhesive for splicing optical fibers.

8. The device of claim 7, wherein the adhesive has a refractive index that matches that of an optical fibre.

9. The device of claim 7 or 8 wherein the adhesive comprises a polyfunctional acrylate or methacrylate and a coreactive monomer.

10. The device of any of claims 4-9 wherein the tube comprises a generally tubular straight container whose internal cross-section is greater at its ends than at an intermediate region between its ends.

11. The device of any of claims 4-10, wherein the tube comprises a generally tubular straight container whose smallest internal cross-sectional dimension is at least 150 microns and whose largest internal cross-sectional dimension is less than 3000 microns.

12. The device of any preceding claim, wherein the elongate flexible means has on the side which engages the end of a tube a sealing material which is an adhesive.

13. Apparatus for splicing an optical fibre which includes a device according to any preceding claim.

## Patentansprüche

1. Vorrichtung zum Speichern und Freigeben von Hülsen, die ein Gehäuse (5) aufweist, das eine längliche, flexible Einrichtung (12) zum Zusammenarbeiten mit den Enden der Hülse (14) und zum Abdichten derselben enthält, welche flexible Einrichtung (12) mit einer Einrichtung (8) zum Bewegen der länglichen flexiblen Einrichtung relativ zum Gehäuse (5) verbunden ist, um die Hülse (14) in dem Gehäuse zu bewegen und die Hülse aus dem Gehäuse auszugeben, und welche längliche flexible Einrichtung in Kontakt mit einer Trageinrichtung (9) ist, um die längliche flexible Einrichtung gegen die Enden einer Hülse zu halten und um die Enden der Hülse abzudichten und die Hülse zu bewegen.

2. Vorrichtung nach Anspruch 1, bei der die längliche, flexible Einrichtung (12) Streifen zum Zusammenarbeiten mit den und Abdichten der Enden der Hülse aufweist.

3. Vorrichtung nach Anspruch 2, bei der die Einrichtung (8) zum Bewegen der Streifen eine Bewegung der Streifen gestattet, um hierbei die Dichtung zwischen den Streifen und der Hülse aufrecht zu erhalten, während die Hülse im Gehäuse bewegt wird, um die Hülse aus dem Gehäuse auszugeben.

4. Vorrichtung nach Anspruch 2, bei der die gespeicherte Hülse zum Abdichten einer Spleißung in einer optischen Faser geeignet ist.

5. Vorrichtung nach Anspruch 2 oder 4, bei der die Hülse eine Flüssigkeit enthält.

6. Vorrichtung nach Anspruch 5, bei der die Hülse einen flüssigen Kleber im Mittelteil der Hülse enthält.

7. Vorrichtung nach Anspruch 6, bei der die Hülse einen Kleber zum Spleißen von optischen Fasern enthält.

8. Vorrichtung nach Anspruch 7, bei der der Kleber eine Brechungszahl hat, die jener einer optischen Faser entspricht.

9. Vorrichtung nach Anspruch 7 oder 8, bei der der Kleber ein polyfunktionelles Acrylat oder Methacrylat und ein koreaktives Monomeres aufweist.

10. Vorrichtung nach einem der Ansprüche 4 bis 9, bei der die Hülse einen im allgemeinen rohrförmigen geraden Behälter aufweist, dessen Innenquerschnitt an seinen Enden größer als am Mittelbereich zwischen seinen Enden ist.

11. Vorrichtung nach einem der Ansprüche 4 bis 10, bei der die Hülse einen im allgemeinen rohrförmigen geraden Behälter aufweist, dessen kleinste Innenquerschnittsabmessung wenigstens 150 Mikron beträgt und dessen größte Innenquerschnittsabmessung kleiner als 3000 Mikron ist.

12. Vorrichtung nach einem der vorangehenden Ansprüche, bei der die längliche flexible Einrichtung an der Seite, die mit dem Ende einer Hülse zusammenarbeitet, ein Dichtungsmaterial hat, das ein Kleber ist.

13. Vorrichtung zum Spleißen einer optischen Faser, die eine Vorrichtung nach einem der vorangehenden Ansprüche enthält.

## Revendications

1. Dispositif pour emmagasiner et distribuer des tubes, comprenant un boîtier (5) contenant un élément flexible et allongé (12) destiné à s'appliquer contre les extrémites du tube (14) et à les obturer hermétiquement, lequel élément flexible et allongé (12) est relié à des moyens (8) destinés à déplacer ledit élément flexible et allongé par rapport au boîtier (5) afin de déplacer le tube (14) à l'intérieur du boîtier et de décharger le tube du boîtier, et lequel élément flexible et allongé est en contact avec des moyens (9) de support destinés à maintenir l'élément flexible et allongé contre les extrémités d'un tube afin d'obturer hermétiquement les extrémités du tube et de déplacer le tube.

2. Dispositif selon la revendication 1, dans lequel l'élément flexible et allongé (12) comprend des rubans destinés à s'appliquer contre les extrémités du tube et à les obturer hermétiquement.

3. Dispositif selon la revendication 2, dans lequel les moyens (8) desrinés à déplacer lesdits rubans produisent un mouvement des rubans pour maintenir ainsi l'obturation hermétique entre les rubans er le tube tour en déplaçant le tube dans le boîtier pour décharger le tube du boîtier.

4. Dispositif selon la revendication 2, dans lequel le tube emmagasiné convient pour fermer hermétiquement un raccord de fibre optique.

5. Dispositif selon la revendication 2 ou 4, dans lequel le tube contient un liquide.

6. Dispositif selon la revendication 5, dans lequel le tube contient un adhésif liquide dans la partie centrale du tube.

7. Dispositif selon la revendication 6, dans lequel le tube contient un adhésif pour le raccordement de fibres optiques.

8. Dispositif selon la revendication 7, dans lequel l'adhésif présente un indice de réfraction qui correspond à celui d'une fibre optique.

9. Dispositif selon la revendication 7 ou 8, dans lequel l'adhésif comprend un acrylate ou méthacrylate polyfonctionnel et un monomère coréactif.

10. Dispositif selon l'une quelconque des revendications 4-9, dans lequel le tube comprend un récipient droit, globalement tubulaire, dont la section transversale interne est plus grande à ses extrémités qu'à une zone intermédiaire comprise entre ses extrémités.

11. Dispositif selon l'une quelconque des revendications 4-10, dans lequel le tube comprend un récipient droit, globalement tubulaire, dont la dimension interne la plus petite, en section transversale, est d'au moins 150 micromètres et dont la dimension interne la plus grande, en section transversale, est inférieure à 3000 micromètres.

12. Dispositif selon l'une quelconque des revendications précédentes, dans lequel l'élément flexible et allongé porte, sur la face qui s'applique contre l'extrémité d'un tube, une matière d'obturation hermétique qui est un adhésif.

13. Appareil pour le raccordement d'une fibre optique, qui comprend un dispositif selon l'une quelconque des revendications précédentes.